# EUROPEAN PATENT SPECIFICATION

(11) **EP 2 481 659 B1**
(45) Date of publication and mention of the grant of the patent: **11.03.2015**
(21) Application number: 12152670.1
(22) Date of filing: 26.01.2012
(51) Int. Cl.: B62K 5/00, B62K 5/08, B60G 9/02, B60G 11/14, B62K 5/007

(54) **Wheel automatic adjustment mechanism and foldable motorized vehicle having same**
Automatischer Radanpassungsmechanismus und damit ausgerüstetes klappbares Kraftfahrzeug
Mécanisme de réglage automatique de roue et véhicule motorisé pliable l'utilisant

(30) Priority: 24.01.2012 US 201213357247; 28.01.2011 CN 201120029857 U; 28.01.2011 CN 201120029836 U
(43) Date of publication of application: 01.08.2012
(73) Proprietor: DongGuan Prestige Sporting Products Co., Ltd., Dongguan City, Guangdong Province (CN)
(72) Inventor: Wu, Chichun, Dongguan City (CN); Zhang, Zhao, Dongguan City (CN)
(74) Representative: Jordan, Volker Otto Wilhelm

(56) References cited:
- EP-A1- 1 249 215
- GB-A- 2 367 541
- JP-A- S55 102 714
- US-A- 5 630 774
- US-A1- 2003 067 151
- US-A1- 2005 057 032
- US-A1- 2006 192 358
- US-A1- 2010 013 183
- US-B1- 6 299 186

## Description

### FIELD OF THE PRESENT INVENTION

The present invention relates to an adjustment mechanism, in particular, to an automatic wheel adjustment mechanism mounted between front wheels and a front wheel stem of an foldable motorized vehicle, for ensuring that both front wheels contact the ground while turning.

### BACKGROUND OF THE PRESENT INVENTION

Currently, for better use experience of drivers of different ages and different physical conditions, four-wheel motorized vehicle are mostly disposed with an angle adjustment mechanism between a front wheel stem and a body rack. The angle adjustment mechanism can be used by a driver to adjust the angle freely, so that every driver can hold the handle mounted on the front wheel stem when sitting on a seat to control the handle, meeting requirements of different users, and being convenient in use.

However, in the current four-wheel motorized vehicle, the two front wheels are generally fixedly connected to the front wheel stem directly, and when the front wheel stem is in a vertical state, the driver can normally control the driving direction of the two front wheels when rotating the front wheel stem to the left or the right. However, when the driver adjusts the front wheel stem to an angle through the angle adjustment mechanism, the front wheel stem assumes an inclined state with respect to that before the adjustment, so when the electric vehicle turns and the front wheel stem is rotated through the handle, the front wheel stem drives an axle of the two front wheels to swing, thus causing one of the two front wheels tilts with respect to the other one. The tilted front wheel cannot travel without leaving the ground, which has a great impact on the driving safety during turning, and the technology used in the current motorized vehicle is unable to solve the above problem.

Therefore, a heretofore unaddressed need exists in the art to address the aforementioned deficiencies and inadequacies.

A scooter with two steerable front wheels and an automatic wheel adjustment mechanism according to the preamble of claim 1 is known from GB 2 367 541 A.

### SUMMARY OF THE PRESENT INVENTION

The present invention provides an automatic wheel adjustment mechanism having a simple structure and capable of preventing the front wheels of a motorized vehicle from tilting to affect driving safety, as is defined in claim 1.

Preferred embodiments are defined in the dependent claims. Further, the invention provides according to claims 7 and 8 a foldable motorized vehicle having such an automatic wheel adjustment mechanism.

These and other aspects of the present invention will become apparent from the following description of the preferred embodiment taken in conjunction with the following drawings, although variations and modifications therein may be affected without departing from the scope of the appended claims.

### BRIEF DESCRIPTION OF THE DRAWINGS

Further features and benefits of the present invention will be apparent from a detailed description of preferred embodiments thereof taken in conjunction with the following drawings, wherein similar elements are referred to with similar reference numbers, and wherein:
FIG. 1 is an abbreviated perspective view of a foldable motorized vehicle according one embodiment of the present invention;
FIG. 2 is an perspective view of an automatic wheel adjustment mechanism according to one embodiment of the present invention;
FIG. 3 is an exploded perspective view of the automatic wheel adjustment mechanism according to one embodiment of the present invention;
FIG. 4 is a perspective view of a connecting member in the automatic wheel adjustment mechanism according to one embodiment of the present invention;
FIG. 5 is a perspective view of a shock absorber in the automatic wheel adjustment mechanism according to one embodiment of the present invention;
FIG. 6 is a front illustration of the automatic wheel adjustment mechanism when the front wheels were turned according to one embodiment of the present invention; and
FIG. 7 is a front view of the automatic wheel adjustment mechanism after the wheels automatically adjustment according to one embodiment of the present invention.

### DETAILED DESCRIPTION OF THE PRESENT INVENTION

The present invention is more particularly described in the following examples that are intended as illustrative only since numerous modifications and variations therein will be apparent to those skilled in the art. Various embodiments of the invention are now described in detail. Referring to the drawings, like numbers indicate like components throughout the views.

The terms used in this specification generally have their ordinary meanings in the art, within the context of the disclosure, and in the specific context where each term is used. Certain terms that are used to describe the disclosure are discussed below, or elsewhere in the specification, to provide additional guidance to the practitioner regarding the description of the disclosure. The use of examples anywhere in this specification, including examples of any terms discussed herein, is illustrative only, and in no way limits the scope and meaning of the disclosure or of any exemplified term. Likewise, the disclosure is not limited to various embodiments given in this specification.

As used herein, "around", "about" or "approximately" shall generally mean within 20 percent, preferably within 10 percent, and more preferably within 5 percent of a given value or range. Numerical quantities given herein are approximate, meaning that the term "around", "about" or "approximately" can be inferred if not expressly stated.

As used herein, the terms "comprising," "including," "having," "containing," "involving," and the like are to be understood to be open-ended, i.e., to mean including but not limited to.

Embodiments of the present invention are described below with reference to the accompanying drawings, and in the accompanying drawings like reference numerals represent like elements.

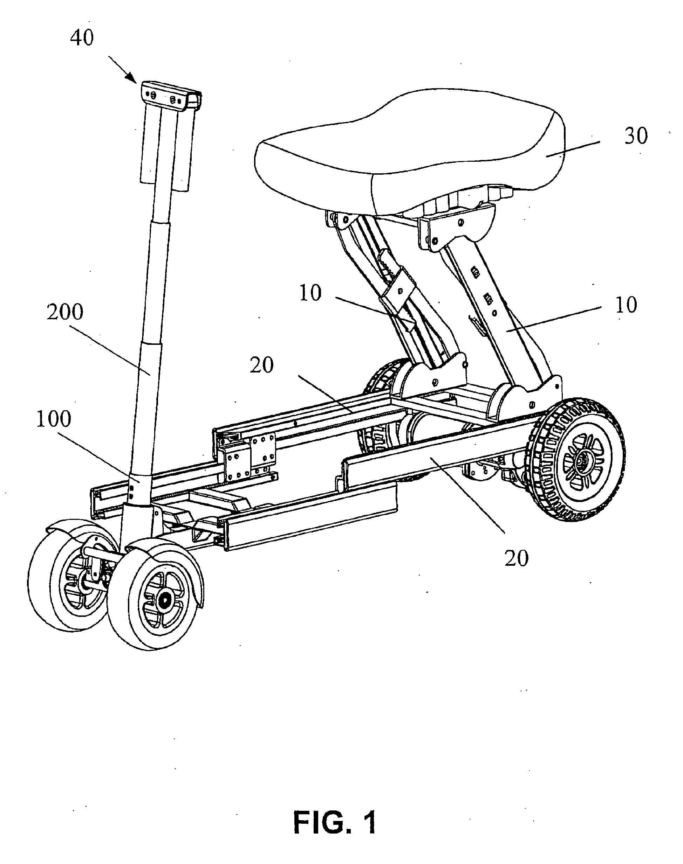

Referring now to FIG. 1, a perspective view of a foldable motorized vehicle is shown according one embodiment of the present invention. The foldable motorized vehicle has: (a) a foldable frame body 20, (b) a foldable seat mounting rack 10, (c) a seat 30, (d) a front wheel steering mechanism 100, and (e) handlebar folding mechanism 40 with two foldable handlebars, and a steering axial rod 200. As it is shown in FIG. 1, the seat, the frame body, and steering are all foldable so that the entire vehicle is foldable to save storage space.

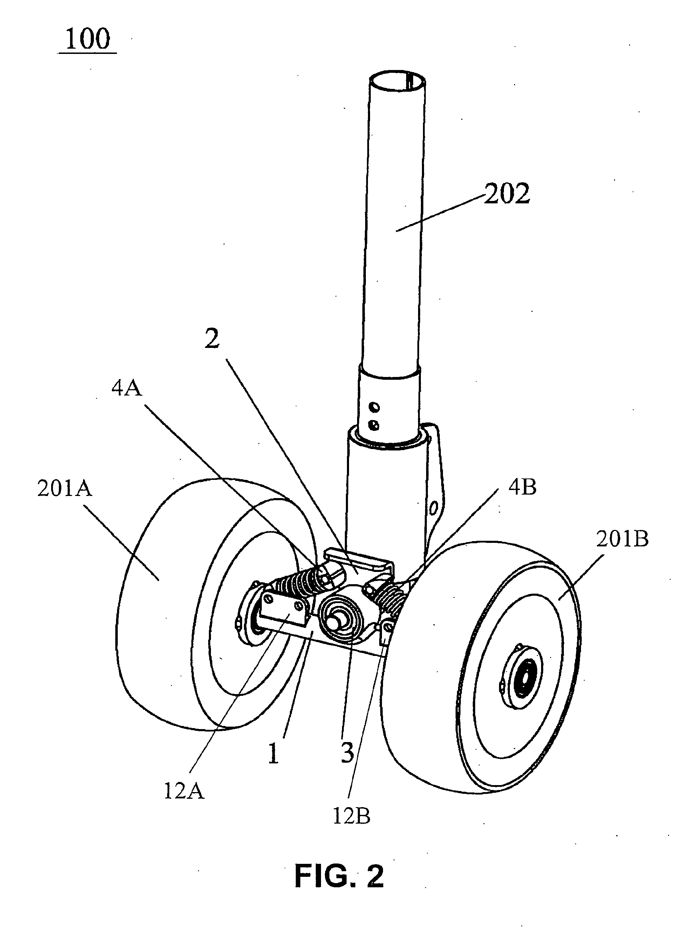

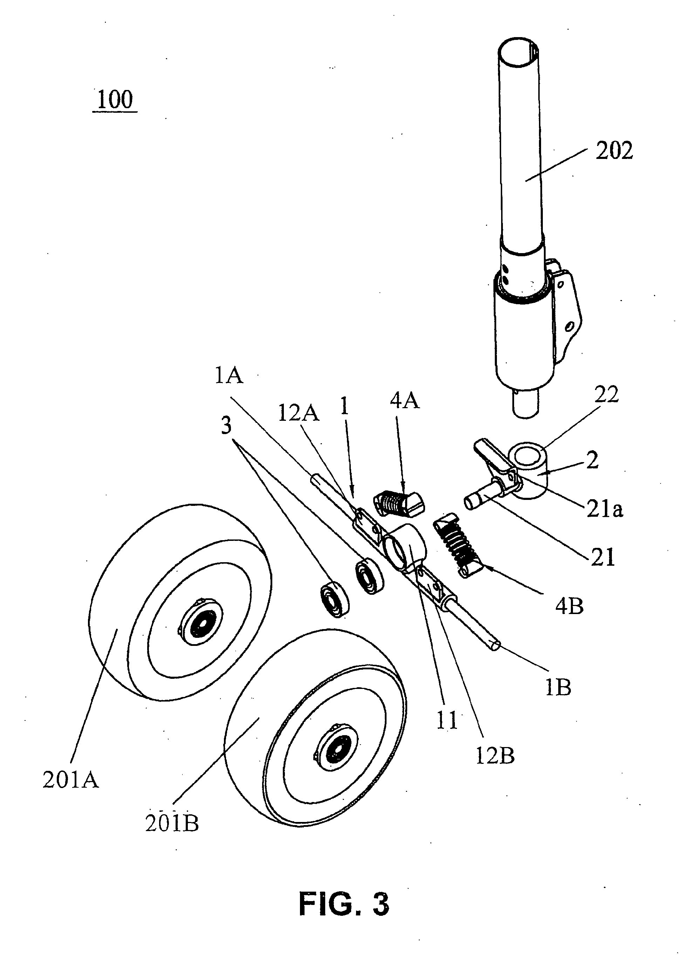

FIG. 2 offers a closer and detailed view of the automatic wheel adjustment mechanism 100 of the foldable motorized vehicle according to one embodiment of the present invention. Referring now to FIG. 3, an exploded perspective view of the automatic wheel adjustment mechanism is shown according to one embodiment of the present invention. In one embodiment, the automatic wheel adjustment mechanism includes: (a) a front wheel supporting shaft 1, (b) a connecting member 2, and (c) a plurality of bearings 3. The front wheel supporting shaft 1 has a first end 1A , a second end 1 B, a bearing housing 11 positioned on the top center portion of the front wheel supporting shaft 1, a first connecting portion 12A positioned on a first end 1A of the front wheel supporting shaft 1, and a second connecting portion 12B positioned on a second end 1 B of the front wheel supporting shaft 1.

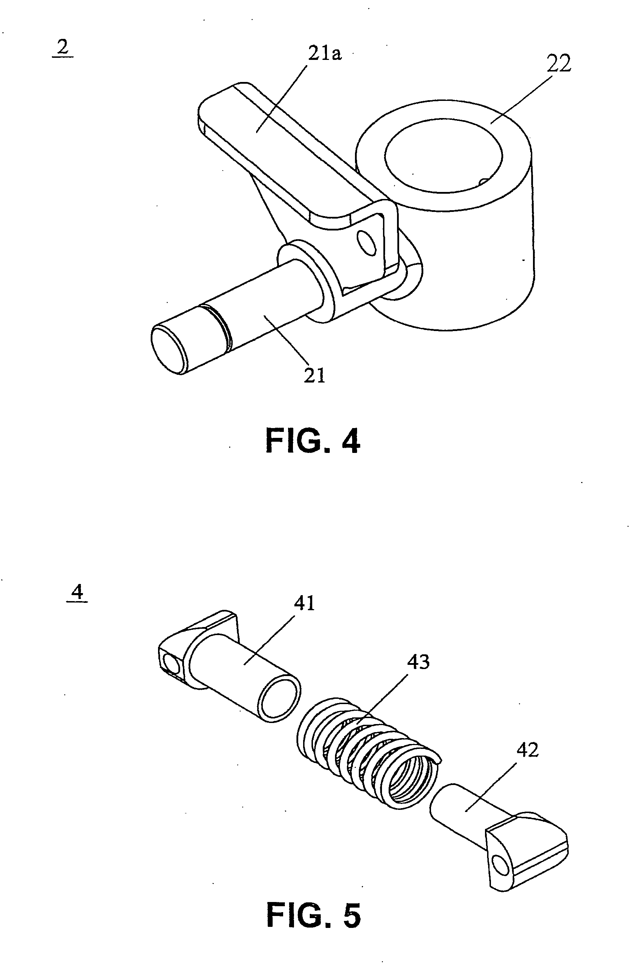

As shown in FIG. 4, in one embodiment, the connecting member 2 has a ring shaped body 22 on a first end and a connecting shaft 21 on a second end. The connecting shaft 21 extends upwards to form a connecting portion 21 a. The plurality of the bearings 3 are mounted inside of the bearing housing 11 of the front wheel supporting shaft 1.

The first front wheel 201A is mounted on the first end 1A of the front wheel supporting shaft 1, and the second front wheel 201 B is mounted on the second end 1 B of the front wheel supporting shaft 1.

The lower end of the front wheel stem 202 is inserted into the ring shaped body 22 of the connecting member 2 and is fixed onto the ring shaped body 22 of the connecting member 2.

The connecting shaft 21 of the connecting member 2 is perpendicular to the ring shaped body 22 of the connecting member 2 and protrudes forward from the connecting member 2, and mounted inside of the inner races of the plurality of the bearings 3.

Referring to FIG. 5, the automatic wheel adjustment mechanism 100 further includes a first shock absorber 4A and a second shock absorber 4B. Each of the first and second shock absorbers comprises a first end portion 41, a second end portion 42, and an elastic element 43. The elastic element 43 is disposed obliquely between the first end portion 41, and the second end portion 42 of the first and second shock absorbers.

The first end portion 41 of the first shock absorber 4A is connected to the connecting portion 21 a of the connecting member 2. The second end portion 42 of the first shock absorber 4A is connected to the first connecting portion 12A of the front wheel supporting shaft 1. The first end portion 41 of the second shock absorber 4B is connected to the connecting portion 21 a of the connecting member 2. The second end portion 42 is connected to the second connecting portion 12B of the front wheel supporting shaft 1.

The elastic element 43 of the first shock absorber 4A and the second shock absorber 4B are coil springs. The elastic element 43 of the first shock absorber 4A and the second shock absorber 4B are placed on two sides of the connecting shaft 21 of the connecting member 2, symmetrically, in a shape of two splayed legs.

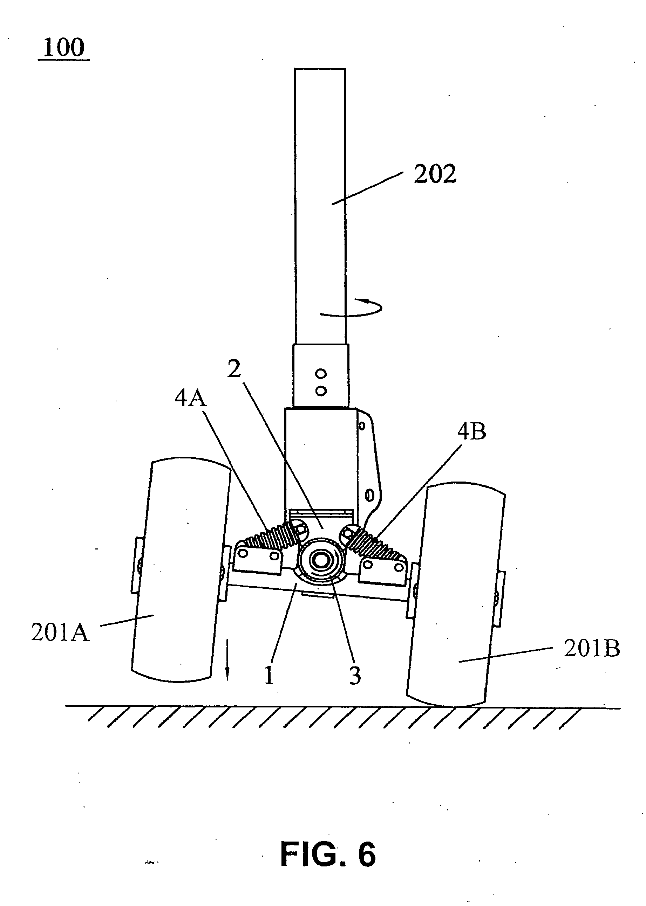

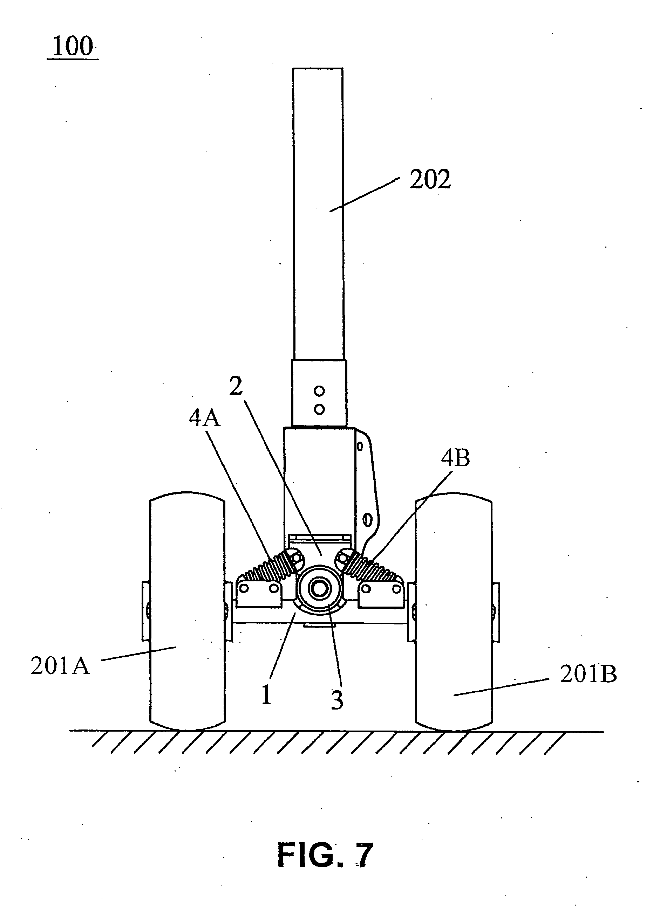

In view of the above and referring to FIG. 6 and FIG. 7, the front wheel stem 202 is perpendicular to the front wheel supporting shaft 1, during turning, the front wheel stem 202 is rotated, so as to drive the connecting member 2 to rotate. The connecting member 2 drives the connecting shaft 21 to swing towards the turning direction, then the connecting shaft 21 drives the front wheel supporting shaft 1 to swing. At this time, the front wheel supporting shaft 1 rotates in parallel to the ground, the first front wheel 201 A and the second front wheel 210B roll and turn without leaving the ground. After the front wheel stem 202 is adjusted to be inclined, during turning, the front wheel stem 202 is rotated, so as to drive the connecting member 2 to rotate, the connecting member 2 is inclined along with the front wheel stem 202, and therefore, after the connecting member 2 rotates to drive the connecting shaft 21 to swing, one end of the front wheel supporting shaft 1 tilts with respect to the other end. Then, the front wheel supporting shaft 1 is no longer parallel to the ground but has one end tilted, and one of the front wheels 201 is driven by the front wheel supporting shaft 1 to tilt. The connecting shaft 21 is pivoted on the front wheel supporting shaft 1 through the bearings 3, and therefore, the tilted end of the front wheel supporting shaft 1 descends along an axis of the connecting shaft 21 under the action of gravity of the front wheel 201. The tilted front wheel 201 also descends along with the front wheel supporting shaft 1, such that the front wheel supporting shaft 1 keeps in parallel to the ground, thus enabling the front wheels 201 to roll and turn without leaving the ground.

Compared with the prior art, in the present invention, the bearings 3 are mounted at the middle portion of the front wheel supporting shaft 1, the connecting member 2 is sleeved on and fixed to the front wheel stem 202, and the connecting shaft 21 is sleeved on and fixed to the bearings 3, so that when the front wheel stem 202 rotates to swing the connecting shaft 21, the front wheel supporting shaft 1 is further driven to swing, thereby realizing turning. After the front wheel supporting shaft 1 swings, the front wheel supporting shaft 1 rotates along the connecting shaft 21 under the action of gravity of the front wheel 201, so as to enable the first front wheel 201A and the second front wheel 201 B to travel without leaving the ground, thereby preventing the first front wheel 201 A and the second front wheel 201 B from tilting to affect driving safety. The present invention has a simple structure and is convenient in use. In addition, the first shock absorber 4A and the second shock absorber 4B are disposed to enable the automatic wheel adjustment mechanism 100 to reduce the shock incurred by the front wheels 201 to the front wheel stem 202 when adjusting the front wheels 201 during turning, thereby making the driving more comfortable.

The angle adjustment method of the front wheel stem 202 involved in the automatic wheel adjustment mechanism 100 according to the present invention is well known by those of ordinary skill in the art, and is not illustrated in detail.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to activate others skilled in the art to utilize the invention and various embodiments and with various modifications as are suited to the particular use contemplated. Alternative embodiments will become apparent to those skilled in the art to which the present invention pertains. Accordingly, the scope of the present invention is defined by the appended claims rather than the foregoing description and the exemplary embodiments described therein.

## Claims

1. An automatic wheel adjustment mechanism mountable between a first front wheel (201 A) and a second front wheel (201 B) and a front wheel stem (202) of a foldable motorized vehicle, comprising:
(a) a front wheel supporting shaft (1) having a first end (1A), a second end (1 B), a bearing housing (11) positioned on the top center portion of the front wheel supporting shaft, a first connecting portion (12A) positioned on a first end of the front wheel supporting shaft, and a second connecting portion (12B) positioned on a second end of the front wheel supporting shaft;
(b) a connecting member (2) having a ring shaped body (22) on a first end and a connecting shaft (21) on a second end,
**characterized in that** the connecting shaft (21) protrudes forward from the ring shaped body (22) and has a connecting portion (21a) which extends upwards from the connecting shaft (21), and that the automatic wheel adjustment mechanism further comprises:
(c) a plurality of bearings (3) mounted inside of the bearing housing (11),
wherein outer races of the plurality of the bearings (3) are fixed at the center portion of the front wheel supporting shaft (1) inside of the bearing housing (11), the ring shaped body (22) of the connecting member (2) is connectable to the lower end of the front wheel stem (20), the connecting shaft (21) of the connecting member passes through and fixedly connected to the inner races of the plurality of the bearings (3).

2. The automatic wheel adjustment mechanism according to claim 1, wherein the first front wheel (201A) is mounted on the first end (1A) of the front wheel supporting shaft (1), and the second front wheel (201 B) is mounted on the second end (1 B) of the front wheel supporting shaft (1).

3. The automatic wheel adjustment mechanism according to claim 2, wherein the lower end of the front wheel stem (202) is inserted into the ring shaped body (22) of the connecting member (2) and is fixed onto the ring shaped body (22) of the connecting member (2).

4. The automatic wheel adjustment mechanism according to claim 3, wherein the connecting shaft (21) of the connecting member (2) is perpendicular to the ring shaped body (22) of the connecting member (2) and is mounted inside of the inner races of the plurality of the bearings (3).

5. The automatic wheel adjustment mechanism according to claim 4, wherein the automatic wheel adjustment mechanism further comprises a first shock absorber (4A) and a second shock absorber (4B), each of the first and second shock absorbers comprises a first end portion (41), a second end portion (42), and an elastic element (43), the elastic element is disposed obliquely between the first end portion (41) and the second end portion (42) of the first and second shock absorbers.

6. The automatic wheel adjustment mechanism according to claim 5, wherein the first end portion (41) of the first shock absorber (4A) is connected to the connecting portion (21 a) of the connecting member (2), the second end portion (42) of the first shock absorber (4A) is connected to the first connecting portion (12A) of the front wheel supporting shaft (21), the first end portion (42) of the second shock absorber (4B) is connected to the connecting portion (21 a) of the connecting member (2), and the second end portion (42) is connected to the second connecting portion (12B) of the front wheel supporting shaft (21).

7. The automatic wheel adjustment mechanism according to claim 6, wherein the elastic element (43) of the first shock absorber (4A) and the second shock absorber (4B) comprises a coil spring, and the elastic element (43) of the first shock absorber (4A) and the second shock absorber (4B) are placed on two sides of the connecting shaft (21) of the connecting member (2), symmetrically, in a shape of two splayed legs.

8. A foldable motorized vehicle, comprising:
a first front wheel (201 A);
a second front wheel (201 B);
a front wheel stem (202); and
an automatic wheel adjustment mechanism according to claim 1 mounted between the first front wheel (201A) and the second front wheel (201 B) and the front wheel stem (202).

9. The foldable motorized vehicle of claim 8, having the automatic wheel adjustment mechanism of one of claims 2 to 7.

## Patentansprüche

1. Automatischer Rad-Einstellmechanismus, welcher zwischen einem ersten Vorderrad (201A) und einem zweiten Vorderrad (201 B) und einem Vorderad-Vorbau (202) von einem zusammenlegbaren motorisierten Fahrzeug montierbar ist, umfassend:
(a) eine Vorderad-Tragachse (1) mit einem ersten Ende (1A), einem zweiten Ende (1 B), einem Lagergehäuse (11), welches an dem oberen Zentralabschnitt von der Vorderad-Tragachse angeordnet ist, einem ersten Verbindungsabschnitt (12A), welcher an einem ersten Ende von der Vorderad-Tragachse angeordnet ist, und einem zweiten Verbindungsabschnitt (12B), welcher an einem zweiten Ende von der Vorderad-Tragachse angeordnet ist;
(b) ein Verbindungselement (2) mit einem ringförmigen Körper (22) an einem ersten Ende und einer Verbindungsachse (21) an einem zweiten Ende,
**dadurch gekennzeichnet, dass** die Verbindungsachse (21) von dem ringförmigen Körper (22) nach vorne hin vorsteht und einen Verbindungsabschnitt (21a) hat, welcher sich von der Verbindungsachse (21) aufwärts erstreckt, und dass der automatische Rad-Einstellmechanismus ferner umfasst:
(c) eine Mehrzahl von Lagern (3), welche im Inneren von dem Lagergehäuse (11) montiert sind,
wobei äußere Laufringe von der Mehrzahl von den Lagern (3) an dem Zentralabschnitt von der Vorderad-Tragachse (1) im Inneren des Lagergehäuses (11) fixiert sind, der ringförmige Körper (22) von dem Verbindungselement (2) mit dem unteren Ende von dem Vorderad-Vorbau (20) verbindbar ist, die Verbindungsachse (21) von dem Verbindungselement durch die inneren Laufringe von der Mehrzahl von den Lagern (3) hindurchführt und fest mit diesen verbunden ist.

2. Automatischer Rad-Einstellmechanismus nach Anspruch 1, wobei das erste Vorderrad (201A) an dem ersten Ende (1A) von der Vorderad-Tragachse (1) montiert ist, und das zweite Vorderrad (201 B) an dem zweiten Ende (1 B) von derVorderad-Tragachse (1) montiert ist.

3. Automatischer Rad-Einstellmechanismus nach Anspruch 2, wobei das untere Ende von dem Vorderad-Vorbau (202) in den ringförmigen Körper (22) von dem Verbindungselement (2) eingesetzt ist und an dem ringförmigen Körper (22) von dem Verbindungselement (2) fixiert ist.

4. Automatischer Rad-Einstellmechanismus nach Anspruch 3, wobei die Verbindungsachse (21) von dem Verbindungselement (2) orthogonal zu dem ringförmigen Körper (22) von dem Verbindungselement (2) ist und im Inneren von den inneren Laufringen von der Mehrzahl von den Lagern (3) montiert ist.

5. Automatischer Rad-Einstellmechanismus nach Anspruch 4, wobei der automatische Rad-Einstellmechanismus ferner einen ersten Stoßdämpfer (4A) und einen zweiten Stoßdämpfer (4B) umfasst, wobei jeder von den ersten und zweiten Stoßdämpfern einen ersten Endabschnitt (41), einen zweiten Endabschnitt (42) und ein elastisches Element (43) umfasst, wobei das elastische Element schräg zwischen dem ersten Endabschnitt (41) und dem zweiten Endabschnitt (42) von den ersten und zweiten Stoßdämpfern angeordnet ist.

6. Automatischer Rad-Einstellmechanismus nach Anspruch 5, wobei der erste Endabschnitt (41) von dem ersten Stoßdämpfer (4A) mit dem Verbindungsabschnitt (21a) von dem Verbindungselement (2) verbunden ist, der zweite Endabschnitt (42) von dem ersten Stoßdämpfer (4A) mit dem ersten Verbindungsabschnitt (12A) von der Vorderad-Tragachse (21) verbunden ist, der erste Endabschnitt (42) von dem zweiten Stoßdämpfer (4B) mit dem Verbindungsabschnitt (21a) von dem Verbindungselement (2) verbunden ist und der zweite Endabschnitt (42) mit dem zweiten Verbindungsabschnitt (12B) von der Vorderad-Tragachse (21) verbunden ist.

7. Automatischer Rad-Einstellmechanismus nach Anspruch 6, wobei das elastische Element (43) von dem ersten Stoßdämpfer (4A) und dem zweiten Stoßdämpfer (4B) eine Schraubenfeder umfasst, und das elastische Element (43) von dem ersten Stoßdämpfer (4A) und dem zweiten Stoßdämpfer (4B) auf zwei Seiten von der Verbindungsachse (21) von dem Verbindungselement (2) symmetrisch in einer Form von zwei abgespreizten Beinen angeordnet sind.

8. Zusammenlegbares motorisiertes Fahrzeug, umfassend:
ein erstes Vorderrad (201A);
ein zweites Vorderrad (201B);
einen Vorderad-Vorbau (202); und
einen automatischen Rad-Einstellmechanismus nach Anspruch 1, welcher zwischen dem ersten Vorderrad (201A) und dem zweiten Vorderrad (201 B) und dem Vorderad-Vorbau (202) montiert ist.

9. Zusammenlegbares motorisiertes Fahrzeug nach Anspruch 8, welches den automatischen Rad-Einstellmechanismus nach einem der Ansprüche 2 bis 7 hat.

## Revendications

1. Un mécanisme de réglage automatique de roue à monter entre une première roue avant (201 A) et une deuxième roue avant (20 1 B) et une tige de roue avant (202) d'un véhicule motorisé pliable, comprenant :
(a) un axe de support de roue avant (1) possédant une première extrémité (1A), une deuxième extrémité (1B), un carter de palier (11) positionné sur la partie centrale supérieure de l'axe de support de roue avant, une première partie de liaison (12A) positionnée sur une première extrémité de l'axe de support de roue avant et une deuxième partie de liaison (12B) positionnée à une deuxième extrémité de l'axe de support de roue avant ;
(b) un élément de liaison (2) possédant un corps de forme circulaire (22) sur une première extrémité et un axe de liaison (21) sur une deuxième extrémité,
**caractérisé en ce que** l'axe de liaison (21) déborde vers l'avant du corps de forme circulaire (22) et possède une partie de liaison (21a) qui s'étend vers le haut à partir de l'axe de liaison (21) et que le mécanisme de réglage automatique de roue comprend par ailleurs :
(c) plusieurs paliers (3) montés à l'intérieur du carter de palier (11),
dans lequel les courses externes des plusieurs paliers (3) sont fixées à la partie centrale de l'axe de support de roue avant (1) à l'intérieur du carter de palier (11), le corps de forme circulaire (22) de l'élément de liaison (2) peut être raccordé à l'extrémité inférieure de la tige de roue avant (20), l'axe de liaison (21) de l'élément de liaison le traverse et est fixé à demeure aux courses intérieures des plusieurs paliers (3).

2. Le mécanisme de réglage automatique de roue selon la revendication 1, dans lequel la première roue avant (201 A) est montée sur la première extrémité (1 A) de l'axe de support de roue avant (1) et la deuxième roue avant (201 B) est montée sur la deuxième extrémité (1B) de l'axe de support de roue avant (1).

3. Le mécanisme de réglage automatique de roue selon la revendication 2, dans lequel l'extrémité inférieure de la tige de roue avant (202) est insérée dans le corps de forme circulaire (22) de l'élément de liaison (2) et est fixée sur le corps de forme circulaire (22) de l'élément de liaison (2).

4. Le mécanisme de réglage automatique de roue selon la revendication 3, dans lequel l'arbre de liaison (21) de l'élément de liaison (2) est perpendiculaire au corps de forme circulaire (22) de l'élément de liaison (2) et est monté à l'intérieur des courses internes des plusieurs paliers (3).

5. Le mécanisme de réglage automatique de roue selon la revendication 4, dans lequel le mécanisme de réglage automatique de roue comprend par ailleurs un premier amortisseur de chocs (4A) et un deuxième amortisseur de chocs (4B), chacun des premier et deuxième amortisseurs de choc comprenant une première partie d'extrémité (41), une deuxième partie d'extrémité (42) et un élément élastique (43), l'élément élastique étant disposé en oblique entre la première partie d'extrémité (41) et la deuxième partie d'extrémité (42) des premier et deuxième amortisseurs de chocs.

6. Le mécanisme de réglage automatique de roue selon la revendication 5, dans lequel la première partie d'extrémité (41) du premier amortisseur de chocs (4A) est reliée à la partie de liaison (21a) de l'élément de liaison (2), la deuxième partie d'extrémité (42) du premier amortisseur de chocs (4A) est reliée à la première partie de liaison (12A) de l'axe de support de roue avant (21), la première partie d'extrémité (42) du deuxième amortisseur de chocs (4B) est reliée à la partie de liaison (21a) de l'élément de liaison (2) et la deuxième partie d'extrémité (42) est reliée à la deuxième partie de liaison (12B) de l'axe de support de roue avant (21).

7. Le mécanisme de réglage automatique de roue selon la revendication 6, dans lequel l'élément élastique (43) du premier amortisseur de chocs (4A) et du deuxième amortisseur de chocs (4B) comprend un ressort hélicoïdal et les éléments élastiques (43) du premier amortisseur de chocs (4A) et du deuxième amortisseur de chocs (4B) sont placés symétriquement sur les deux côtés de l'axe de liaison (21) de l'élément de liaison (2), sous la forme de deux pieds évasés.

8. Un véhicule motorisé pliable comprenant :
une première roue avant (201A) ;
une deuxième roue avant (201B) ;
une tige de roue avant (202) ; et
un mécanisme de réglage automatique de roue selon la revendication 1 fixé entre la première roue avant (201A) et la deuxième roue avant (20 1 B) et la tige de roue avant (202).

9. Le véhicule motorisé pliable selon la revendication 8, possédant le mécanisme de réglage automatique de roue selon l'une des revendications 2 à 7.
